(19) Europäisches Patentamt
European Patent Office
Office européen des brevets

(11)  **EP 2 710 353 B1**

(12)  **EUROPEAN PATENT SPECIFICATION**

(45) Date of publication and mention
of the grant of the patent:
**03.03.2021  Bulletin 2021/09**

(51) Int Cl.:
*G01N 21/65* (2006.01)   *G01J 3/44* (2006.01)
*G01J 3/30* (2006.01)   *G01N 21/35* (2014.01)

(21) Application number: **12730592.8**

(22) Date of filing: **16.05.2012**

(86) International application number:
**PCT/GB2012/000435**

(87) International publication number:
**WO 2012/156667 (22.11.2012 Gazette 2012/47)**

(54) **SPECTROSCOPIC APPARATUS AND METHOD of DETERMINING COMPONENTS PRESENT IN A SAMPLE**

SPEKTROSKOPIEVORRICHTUNG UND VERFAHREN ZUR BESTIMMUNG DER IN EINER PROBE VORKOMMENDEN KOMPONENTEN

APPAREIL SPECTROSCOPIQUE ET PROCÉDÉ POUR DÉTERMINER LES COMPOSANTS PRÉSENTS DANS UN ÉCHANTILLON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2011  EP 11250530**

(43) Date of publication of application:
**26.03.2014  Bulletin 2014/13**

(73) Proprietor: **Renishaw PLC
Wotton-Under-Edge
Gloucestershire GL12 8JR (GB)**

(72) Inventors:
• **BELL, Ian Mac
Gloucestershire GL12 8JR (GB)**
• **THURSTON, Thomas James
Gloucestershire GL12 8JR (GB)**
• **SMITH, Brian John Edward
Gloucestershire GL12 8JR (GB)**
• **FILIK, Jacob
Oxford, Oxon OX 6LB (GB)**

(74) Representative: **Matthews, Paul et al
Renishaw plc
Patent Department
New Mills
Wotton-under-Edge, Gloucestershire GL12 8JR (GB)**

(56) References cited:
WO-A1-2007/144664    US-A1- 2009 210 194
US-A1- 2011 045 598    US-B1- 7 072 770
US-B1- 7 254 501

• **Patrick J. Cutler ET AL: "Methods for Kinetic Modeling of Temporally Resolved Hyperspectral Confocal Fluorescence Images", Applied spectroscopy, 1 February 2009 (2009-02-01), pages 153-163, XP055007632, Retrieved from the Internet:
URL:http://www.opticsinfobase.org/DirectPD FAccess/42473870-BE38-C4E7-1C77C7DE4A866 EC 9_176593.pdf?da=1&id=176593&seq=0&mobile= n o [retrieved on 2011-09-20]**

EP 2 710 353 B1

**Description**

Field of the Invention

This invention relates to spectroscopic apparatus and methods for determining components present in a sample. It is particularly useful in Raman spectroscopy, though it can also be used in other forms of spectroscopy, e.g. using narrow-line photoluminescence, fluorescence, cathode-luminescence, UV visible (UV Vis), nuclear magnetic resonance (NMR), mid infra-red (mid-IR) or near infra-red (NIR).

Background to the Invention

The Raman Effect is the inelastic scattering of light by a sample. In Raman Spectroscopy, a sample is irradiated by monochromatic laser light and the scattered light is then dispersed into a Raman spectrum by a dispersive device, such as a diffraction grating, e.g. in a monochromator, to generate a spectrum called a Raman spectrum. The Raman spectrum is detected by a detector such as a charge-coupled device (CCD). Examples of Raman spectroscopy apparatus are known from US Patents Nos. 5,442,438 and 5,510,894.

Different chemical compounds have different characteristic Raman spectra. Accordingly, the Raman effect can be used to analyse the chemical compounds present.

One such technique for analysing Raman spectra is the Direct Classical Least Squares method (DCLS). This standard technique analyses spectral data $\underline{X}$ of an unknown sample in terms of a set of, K, known component reference spectra $\underline{S}_k$ each having $I$ data points (both may be subject to pre-processing). Component concentrations, $C_k$, for each component reference spectrum are determined by minimising the sum of the squared deviations of the spectral data from the reconstructed model,

$$\sum_{i=1}^{I}\left[X_i - \sum_{k=1}^{K} C_k S_{ki}\right]^2$$

$$(1)$$

where i represents the spectral frequency index. This results in a series of linear equations which are solved directly by matrix inversion for the component concentrations $C_k$.

DCLS will typically produce a solution in which the calculated concentrations of all components are non-zero, even those that are not present in the sample. In general, this is due to the noise present in the spectral data and differences between the reference spectra and data, which can arise due to sample environmental conditions or drift in the spectrometer performance for example. When all components in the sample are present at high concentration, it is a simple matter of comparing the calculated component concentrations to discriminate between components which are present and those that are not. However when some components are present in trace amounts it becomes more difficult to distinguish between components that are genuinely present, and those that have low $C_k$ values due to noise etc.

It is desirable to determine which components are genuinely present in a sample, even when some of the components are present in trace amounts.

WO2007/144664 A1 discloses a method of resolving spectral data into component spectra and concentrations. The technique starts from an initial estimate that the spectral values of a first component of the sample are all equal (an "empty model") and resolves that component. Then successive further components are iteratively resolved from initial "empty model" estimates. The iteration may be repeated until the model converges. A percentage lack of fit (LOF) may be used to test for convergence, the model said to have converged when the change in LOF between two iterations is smaller than a threshold value.

US2011/0045598 A1 discloses a method for the quantative determination of enantiomeric purity. Spectral data for samples of known enantiomeric composition is subjected to a type of multivariate regression modelling known as partial least squares ("PLS-I") regression. How well the regression models predict unknown samples is evaluated in terms of the root-mean-square error ("RMSEP") of prediction. The RMSEP can be used as a figure of merit in comparing different strategies for discriminating between pairs of enantiomers.

Patrick J. Cutler ET AL: "Methods for Kinetic Modeling of Temporally Resolved Hyperspectral Confocal Fluorescence Images", Applied Spectroscopy, 1 February 2009, pages153 to 163 discloses using lack of fit (LOF) to show the accuracy of the model estimated spectra relative to the actual or expected values.

US2009/0210194 A1 discloses a method in which an unknown spectrum obtained from a spectrometer is compared to comparison spectra to determine a degree to which the unknown spectrum corresponds to the comparison spectra. If the unknown spectrum corresponds to a comparison spectrum by a desired degree, the comparison spectrum is regarded as being a candidate spectrum. New comparison spectra are generated from a combination of one of the previously identified candidate spectra and one of comparison spectra and the process repeated. Repetition ceases when the candidate spectra include a desired number of components. Alternatively or additionally, repetition may cease when a desired number of candidate spectra are identified or when one or more candidate spectra are identified which match the unknown spectrum by at least some qualifying correspondence value.

US7254501 B1 discloses a method for determining the most likely composition of a sample.

US7072770 B1 discloses a method to identify components of a mixture.

Summary of the Invention

According to one aspect of the invention there is provided a method of determining components present in a sample from spectral data obtained from the sample according to claim 1.

It is believed that the invention is more effective in identifying trace components present in the sample than the standard DCLS method as described above. In particular, for distinguishing between components that are present in the sample and those that are not present, using the figure of merit based upon values of the model when resolved for one candidate reference spectrum separate from other candidate reference spectra may be more effective than comparing concentrations after the model has been resolved for the whole set of reference spectra. Once a subset of components has been identified, resolving the model for the component reference spectra of the subset, rather than all spectra, may more accurately determine concentrations of components in the sample than the standard DCLS technique.

The figure of merit may be determined in accordance with a merit function, which numerically scores a comparison between the resolved model and the spectral data. Determining that a component is present in the sample may be based upon whether the score for the candidate reference spectrum corresponding to that component meets a preset criterion. The figure of merit may be a measure of goodness of fit. Determining that a component is present in the sample may be based upon whether the inclusion of the candidate reference spectrum corresponding to that component in the model improves the measure of goodness of fit of the model to the spectral data above a preset limit.

The use of such a measure may be more effective in differentiating between trace components that are present in the sample and spurious components that are not present in the sample than the standard DCLS technique. In particular, even when resolving the model for a spurious minor component results in a significant concentration for the spurious component (relative to the concentration for a trace component), the improvement in a measure, such as goodness of fit, for that spurious component tends to be much less significant. Therefore, identifying components that are present in the sample based upon a measure such as goodness of fit, rather than a comparison of calculated concentrations, of the resolved component reference spectra may result in a more accurate solution.

A component reference spectrum may be a typical spectrum for a single chemical component or may be a typical spectrum for a group of different chemical components, such as a group of chemical components that are often found together. An advantage in using a component reference spectrum for a group of different chemical components is that it may reduce the number of fitting steps that have to be carried out relative to having separate spectra for each chemical component of the group. A component reference spectrum may also be specific to other factors, such as temperature and crystal orientation. A predetermined component reference spectrum may have been determined by spectral analysis of a material of a known chemical composition.

The method may comprise determining the components present in the sample in order of decreasing significance as determined by the figure of merit. This may be achieved through successive iterations. In each iteration, the model may be resolved separately for each candidate reference spectrum together with component reference spectra of greater significance as determined in previous iterations. For example, during each iterative step, the model is resolved separately for each candidate together with component reference spectra determined as present in the sample in a previous iteration, This process may be repeated whilst improvements to the figure of merit remain above the preset limit. It will be understood however that component reference spectra or other spectra may be resolved before carrying out the iterative process. For example, the model may be first resolved for a background spectrum that represents features such as the contribution of the substrate that supports the sample, fluorescence and a baseline of the spectrometer. Furthermore, a user may know that certain components are present and the user may have the component reference spectra for these known components resolved before carrying out the iterative step.

In one arrangement, an iteration comprises determining whether a difference between the figure of merit for a most significant candidate reference spectra and the other candidate reference spectra is within a predefined threshold and splitting the iterative process into parallel iterations for each candidate reference spectrum that falls within the threshold, wherein for each parallel iteration the other candidate reference spectrum, rather than the most significant candidate reference spectrum, is considered as a next most significant spectrum in the order. In this way, if at a point in the iterative process a difference in the figure of merit between two or more candidate reference spectra does not merit selecting one of the candidate reference spectra over the other, the search is branched to explore all reasonable alternatives. Setting a narrow threshold will reduce processing as fewer branches will be explored, whereas setting a broad threshold will avoid dropping branches that may provide useful results. A component could then be deemed as present in the sample only if the component is determined as being present in the sample by all parallel iterations.

The measure of goodness of fit is a measure of a discrepancy between the spectral data and the resolved model, e.g. $\sum_{k=1}^{K} C_k \underline{S}_k$. The measure of goodness of fit may be lack of fit, R-squared, likelihood ratio test or other suitable measure. In one embodiment, the measure of goodness of fit is a lack of fit sum of squares, LoF, such as that given by:

$$LoF = \sqrt{\frac{\sum_{i=1}^{I}[X_i - \sum_{k=1}^{K} C_k S_{ki}]^2}{\sum_{i=1}^{I} X_i^2}}$$

(2)

The preset limit may be a proportional improvement in goodness of fit. For example, the proportional improvement in goodness of fit may be an improvement in goodness of fit relative to a baseline, for example a minimum or maximum goodness of fit, achievable for the spectral data and the set of predetermined reference spectra. The baseline may be a value for goodness of fit achievable for the spectral data and set of predetermined component reference spectra that is closest to a value for a perfect fit. For example, the baseline may be determined by calculating a measure of goodness of fit for the model resolved for all of the predetermined component reference spectra (as is the case in standard DCLS).

A system for carrying out the method may be arranged such that the limit for the improvement in the figure of merit/measure of goodness of fit can be set based on spectroscopy performance and/or other requirements. Increasing the limit will tend to improve specificity (freedom from false positive identifications) at the expense of sensitivity (freedom from false negative identifications). The method may comprise establishing a preset limit for a spectroscopy apparatus by obtaining spectral data for samples, wherein the components making up the samples are known, determining components of the sample using the method described above for two or more limit values and selecting a suitable limit for use in the analyses of an unknown sample based on accuracy of the solution (such as the number of false negatives or false positives). Each spectroscopy apparatus may be calibrated to determine a suitable value or range of values for the preset limit and the method may comprise setting the limit to the suitable value or a suitable value identified by the range.

The inclusion of a component reference spectrum in the model may automatically trigger the inclusion of one or more transformations and/or distortions of that component reference spectrum and/or one or more corrective spectra associated with that component reference spectrum. The inclusion of such terms can be useful to correct for components that are not adequately described by a single component reference spectrum. For example, such terms may take account of environmental and/or instrumental differences between the sample and reference spectra. The inclusion of such terms may be particularly applicable to a process where candidates are evaluated together with reference spectrum of components that have already been identified as present in the sample in light of any required distortion to those reference spectra.

Resolving the model may comprise calculating a concentration for the component (corresponding to the candidate spectrum) in the sample.

Determining that a component is present in the sample may be further based upon whether a positive concentration is calculated for the component. A negative concentration is a non-physical solution to the model and therefore, is to be avoided.

Reporting that a component is present may be further based upon whether the concentration for the component is above a predetermined (positive) minimum limit. The minimum limit may be set at a level that is deemed significant to a particular application.

The model may be a Direct Classical Least Squares analysis and the model may be resolved by minimising equation (1) above for particular reference spectra (e.g. the candidate reference spectrum plus the reference spectra of components that have already been selected).

The spectral data may be a Raman spectrum.

According to a further aspect of the invention there is provided apparatus for determining components present in a sample from spectral data obtained from the sample according to claim 12.

According to a yet further aspect of the invention, there is provided a data carrier having stored thereon instructions according to claim 13.

The data carrier may be a non-transient data carrier, such as volatile memory, eg RAM, non-volatile memory, eg ROM, flash memory and data storage devices, such as hard discs, optical discs, or a transient data carrier, such as an electronic or optical signal.

Brief Description of the Drawings

Embodiments of the invention will now be described, by example only, with reference to the accompanying drawings, in which:-

**Figure 1** shows apparatus according to one embodiment of the invention;

**Figure 2** is a flowchart illustrating a method according to one embodiment of the invention; and

**Figure 3** is a diagrammatic representation of the splitting of an iterative process in accordance with one embodiment of the invention.

Description of Embodiments

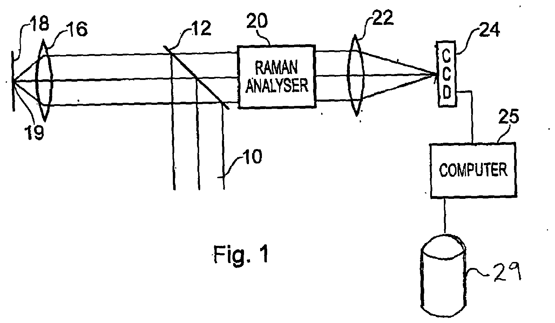

Referring to Fig. 1, apparatus according to the invention comprises a Raman spectrometer connected to a computer 25 that has access to memory 29.

The Raman spectrometer comprises an input laser beam 10 reflected through 90 degrees by a dichroic filter 12, placed at 45 degrees to the optical path. Alternatively a holographic dichroic filter may be placed at a low angle of incidence such as 10 degrees. The laser beam then passes to an objective lens 16, which focuses it at its focal point 19 on a sample 18. Light is scattered by the sample, and is collected by the objective lens 16 and collimated into a parallel beam which passes back to the dichroic filter 12. The filter 12 rejects Rayleigh scattered light having the same frequency as the input laser beam 10, and transmits the Raman scattered light. The Raman scattered light then passes to a Raman analyser 20.

The Raman analyser 20 comprises a dispersive element such as a diffraction grating. The light from the analyser 20 is focused by a lens 22 onto a suitable photo-detector. A photo-detector array is preferred. In the present embodiment the detector 24 is a charge-coupled device (CCD), which consists of a two-dimensional array of pixels, and which is connected to a computer 25 which acquires data from each of the pixels and analyses it as required. The analyser 20 produces a spectrum having various bands as indicated by broken lines 28, spread out in a line along the CCD 24.

Samples 18 may be mounted on an XYZ stage so that spectral data may be collected from each sample under control of the computer.

The computer 25 is programmed with software code on a suitable medium, such as memory 29, comprising instructions, which when executed by a processor of computer 25 cause the computer 25 to perform the analysis routines described below. Alternatively, the data on the Raman spectrum/spectra obtained may be transferred to a separate computer having such software for this analysis. In either case, as the analysis proceeds, the values determined are stored in the computer concerned, and may be further processed and output or displayed to show results of the analysis in terms of the components in the sample/samples. In the case where the analysis is performed by computer 25, memory 29 has stored thereon a databank of component reference spectra to be used for the analysis. Each component reference spectrum is a typical Raman spectrum for a different chemical component or group of chemical components.

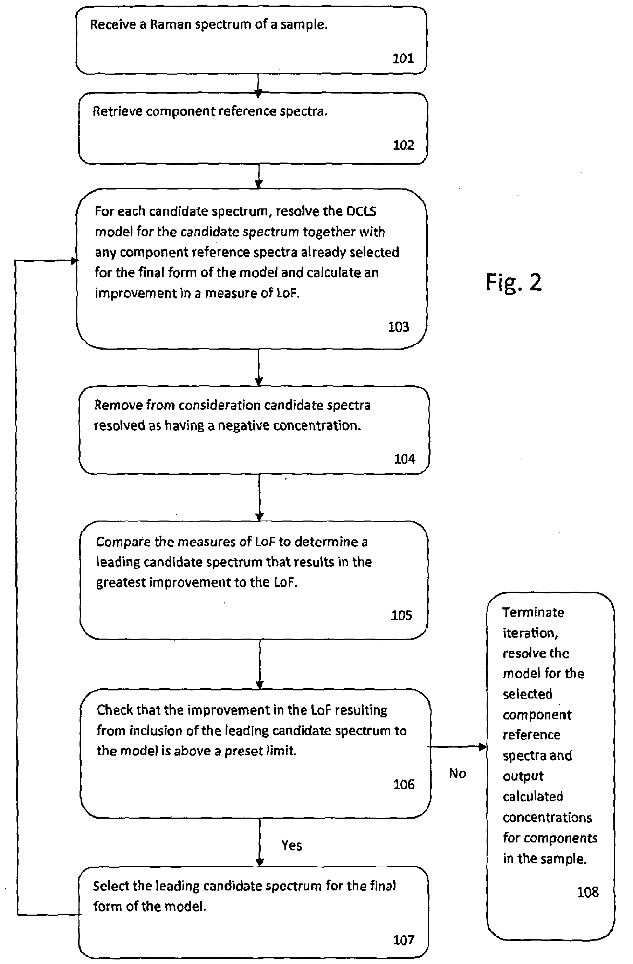

Referring to Figure 2, a method of determining components present in a sample comprises receiving 101 spectral data, in this embodiment Raman spectral data, of the sample 18. In step 102, the set of predetermined Raman reference spectra for different chemical components are retrieved, for example, from the databank in memory 29.

In this embodiment a Direct Classical Least Squares analysis is carried out of the spectral data, wherein equation (1) is resolved for each candidate spectrum of the predetermined set of component reference spectra, steps 103 to 108. A component reference spectrum is selected for inclusion in a final form of the model based upon whether the inclusion of that component reference spectrum improves a measure of goodness of fit of the model to the data above a preset limit.

An iterative process is carried out comprising selecting a component reference spectrum for inclusion in the final form of the model in each iteration in order of decreasing significance as determined by an improvement to the measure of goodness of fit.

In step 103, for each candidate of the set of predetermined component reference spectra, equation (1) is minimised for the candidate reference spectrum together with any component reference spectra that have already been selected, such as in a previous iteration. A measure of goodness of fit is calculated for the resolved components relative to the spectral data of the sample.

In this embodiment, the measure of goodness of fit is a measure of lack of fit (LoF) given by:-

$$LoF = \sqrt{\frac{\sum_{i=1}^{I}[X_i - \sum_{k=1}^{K} C_k S_{ki}]^2}{\sum_{i=1}^{I} X_i^2}}$$

This measure of lack of fit is compared to a previous measure of LoF calculated for the selected component reference spectra before the addition of the candidate reference spectrum to determine an improvement to the measure of LoF resulting from the addition.

In one embodiment, the improvement in the LoF, $L_{lpr}$ is calculated as a proportional improvement in the LoF relative to a baseline LoF, $L_{min}$, as given by:-

$$L_{lpr} = \frac{L_{old} - L_{new}}{L_{old} - L_{min}}$$

where $L_{old}$ is the LoF value calculated for the selected component reference spectra before the inclusion of the candidate reference spectrum and $L_{new}$ is the LoF value calculated for the selected component reference spectra including the candidate reference spectrum.

In one embodiment $L_{min}$ may be set to zero. In another embodiment, the baseline, $L_{min}$, is a minimum obtainable LoF calculated from the model when resolved for all predetermined reference spectra, as in conventional DCLS. In this way, rather than calculating $L_{lpr}$ against an absolute value of zero, $L_{min}$ is automatically adjusted to take into account data quality. As a consequence, the preset limit can be set relatively independent of data quality or pre-processing options.

In step 104, the process checks the resolved concentrations for the candidate reference spectra and removes from further consideration in the iteration (but not subsequent iterations) candidate reference spectra resolved as having a negative concentration.

In step 105, the improvements in the LoF, $L_{lpr}$ for remaining candidate reference spectra are compared and the candidate reference spectrum associated with the greatest improvement in the LoF becomes the leading candidate reference spectrum for inclusion in the final form of the model.

A check 106 is made to determine whether the improvement in the LoF resulting from addition of the leading candidate reference spectrum is above a preset limit. If the improvement to the LoF, $L_{lpr}$ for the leading candidate reference spectrum is above the preset limit, it is selected 107 as a component reference spectrum that is present in the final form of the model. The process 103 to 107 is then repeated for the remaining unselected component reference spectra.

If the improvement to the LoF, $L_{lpr}$ for the leading candidate reference spectrum is below the preset limit, then the method is terminated and the final form of the model, comprising the model resolved for the component reference spectra selected up to that point, is output as an electronic signal, for example to memory 29 or to a display (not shown). The final form of the model will typically comprise a subset of the set of predetermined component reference spectra, these spectra being those of most significance as measured by lack of fit.

A determination can be made of components present in the sample based upon whether the component reference spectrum corresponding to that component is included in the final form of the model. The concentrations can be determined from the resolved component $C_k$. As the component reference spectra are filtered as part of the iterative process, all reference spectra in the final form of the model may represent components present in the sample. Accordingly, further filtering to remove spurious components may not be necessary.

However, in an alternative embodiment, components having a concentration $C_k$ below a minimum limit in the final form of the model are not reported as present in the sample. The minimum limit may be set based upon the noise in the spectral data or a minimum concentration at which a component is of interest to the user.

The limit to the improvement in the LoF at which a component reference spectrum is selected for the final form of the model controls specificity and sensitivity of the technique and is likely to depend on the requirements of the application and spectroscopy performance. Accordingly, the apparatus may comprise an input for setting the limit for improvement to the LoF, such as an appropriate interface on computer 25. The Raman spectrometer may be calibrated to determine specificity and sensitivity at different limits. Such a calibration may be carried out by obtaining spectral data from samples of known components using the spectrometer, determining components of the sample using the analysis method described above for a plurality of limits and determining the proportion of false negatives and false positives at each limit. Armed with this information, a user can preset the limit used when analysing an unknown sample with the spectrometer for the specificity and sensitivity desired.

In one embodiment, the method comprises an additional step whereby the inclusion of a component reference spectrum in the final form of the model automatically triggers the inclusion of one or more transformations and/or distortions of that component reference spectrum and/or one or more corrective spectra associated with that component reference spectrum. The inclusion of such terms can be useful to correct for components that are not adequately described by a single component reference spectrum. For example, such terms may take account of environmental and/or instrumental differences between the sample and reference spectra.

In a further embodiment, the iterative process is modified to split into parallel iterations if specified criteria are met. In this embodiment, in step 105 a determination is made of whether a difference between the improvement in lack of fit for the leading candidate reference spectrum and each of the other candidate reference spectra is within a predefined threshold.

If this value for one or more of the other candidate reference spectra is within the threshold, the iterative process is branched into parallel iterations for each candidate reference spectrum that falls within the threshold. In each parallel iteration, a candidate reference spectrum that fell within the threshold is selected for the final form of this branch of the model in place of the leading candidate reference spectrum. Each branch of the iterative process including the main iteration is then progressed independently of the other branches and split again, if appropriate. Each branch is terminated when condition 106 is met, the final forms for the model from each branch are compared and components common to all branches could then be reported as present in the sample.

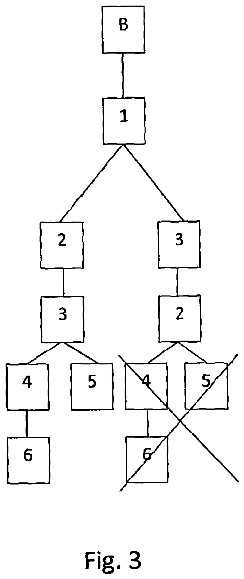

Figure 3 shows an example of how such a process may progress. In this example, first a background spectrum, B, is included in the final form of the model and then component reference spectra are successively selected for the final form of the model in accordance with the method described above. In this example, component reference spectrum 1 is the first to be selected before the iteration is split into two parallel iterations because an improvement in LoF for reference spectrum 3 is within a threshold of the improvement in LoF achieved by leading candidate reference spectrum 2. In this example, in the next iteration, component reference spectrum 3 and 2 respectively are selected for each branch. However, in the following iteration the process is split again as reference spectrum 5 is found to fall within a threshold of improvement in the LoF set by leading candidate reference spectrum 4. However, in this example, in later iterations, reference spectra 4 and 5 are not included in the branches from which they are missing before termination. Accordingly, components corresponding to reference spectra 4 and 5 are not reported as present in the sample.

Furthermore, if, as in the example, after splitting, two branches later converge with all selected reference spectra being common to both branches, it is only necessary to continue with one of the branches. This is illustrated by the cross in Figure 3.

## Claims

1. A method of determining components present in a sample from spectral data obtained from the sample comprising:-
an iterative process wherein, each iteration comprises:-
resolving a model of the spectral data separately for candidates from a set of predetermined component reference spectra (103), and determining whether a component is present in the sample based upon a figure of merit quantifying an effect of including the candidate reference spectrum corresponding to that component in the model (104 to 107), **characterised in that** determining whether the component is present in the sample is based upon whether the inclusion of the candidate reference spectrum corresponding to that component in the model results in an improvement in the figure of merit greater than other candidate reference spectra considered during that iteration (105) and the iterative process is repeated whilst the improvements to the figure of merit meet a preset criterion.

2. A method according to claim 1, wherein the figure of merit is determined in accordance with a merit function, which numerically scores a comparison between the resolved model and the spectral data (103), and determination that a component is present in the sample is based upon whether the score for the candidate reference spectrum corresponding to that component meets a preset criterion (105, 106).

3. A method according to claim 1 or claim 2, wherein the figure of merit is a measure of goodness of fit.

4. A method according to claim 3, comprising determining that a component is present in the sample based upon whether the inclusion of the candidate reference spectrum corresponding to that component in the model improves the measure of goodness of fit of the model to the spectral data above a preset limit (106) and, optionally, tuning the preset limit for a desired specificity and/or sensitivity.

5. A method according to claim 4, wherein the preset limit is a proportional improvement in goodness of fit, and, optionally, wherein the proportional improvement in goodness of fit is an improvement in goodness of fit relative to a baseline goodness of fit achievable for the spectral data and the set of predetermined reference spectra and further optionally, wherein the baseline is a measure of goodness of fit obtained when all predetermined component reference spectra are included in the model.

6. A method according to any one of claims 3 to 5, wherein the measure of goodness of fit is one selected from the group of lack of fit, R-squared and likelihood ratio test and, optionally, wherein the measure of goodness of fit is a lack of fit given by:

$$LoF = \sqrt{\frac{\sum_{i=1}^{I}[X_i - \sum_{k=1}^{K} C_k S_{ki}]^2}{\sum_{i=1}^{I} X_i^2}}$$

where $\underline{X}$ is the spectral data, $\underline{S}_k$ is a set of $K$ component reference spectra for which the model is resolved, each having $I$ data points, $C_k$ is the concentration for the $k$th component reference spectra and i the spectral frequency index.

7. A method according to any one of the preceding claims, wherein components are determined as present in the sample in an order of decreasing significance as determined by the figure of merit and, in each iteration, the model is resolved separately for each candidate reference spectrum together with component reference spectra of greater significance as determined in previous iterations (103).

8. A method according to any one of claims 7, wherein an iteration comprises determining whether a difference between the figure of merit for a most significant candidate reference spectra and the other candidate reference spectra is within a predefined threshold and splitting the iterative process into parallel iterations for each candidate reference spectrum that falls within the threshold, wherein for each parallel iteration the other candidate reference spectrum, rather than the most significant candidate spectrum, is considered as a next most significant spectrum in the order.

9. A method according to claim 7, wherein determining that the component is present in the sample is based upon whether the component is determined as being present in the sample by all parallel iterations.

10. A method according to any one of the preceding claims, wherein the inclusion of a component reference spectrum in the model automatically triggers the inclusion of one or more transformations and/or distortions of that component reference spectrum and/or one or more corrective spectra associated with that component reference spectrum.

11. A method according to any one of the preceding claims, wherein resolving the model comprises calculating a concentration of the component in the sample and determining that the component is present in the sample is based upon whether a positive concentration is calculated for the component (104).

12. Apparatus for determining components present in a sample from a spectral data obtained from the sample, the apparatus comprising a processor (25) arranged to:-
receive the spectral data,
retrieve a set of predetermined component reference spectra, and
carry out the method according to any one of claims 1 to 11.

13. A data carrier having stored thereon instructions, which, when executed by a processor (25), cause the processor (25) to:-
receive spectral data obtained from a sample,
retrieve a set of predetermined component reference spectra, and
carry out the method according to any one of claims 1 to 11.

**Patentansprüche**

1. Verfahren zum Bestimmen von in einer Probe vorhandenen Komponenten aus Spektraldaten, die aus der Probe erhalten werden, umfassend:
einen iterativen Prozess, bei dem jede Iteration umfasst:

ein separates Auflösen eines Modells der Spektraldaten für Kandidaten aus einem Satz vorbestimmter Komponentenreferenzspektren (103) und ein Bestimmen, ob eine Komponente in der Probe vorhanden ist, basierend auf einer Gütezahl, die einen Effekt eines Einschlusses des Kandidatenreferenzspektrums quantifiziert, das dieser Komponente im Modell (104 bis 107) entspricht,

**dadurch gekennzeichnet, dass** die Bestimmung, ob die Komponente in der Probe vorhanden ist, darauf basiert, ob der Einschluss des dieser Komponente entsprechenden Kandidatenreferenzspektrums in das Modell zu einer Verbesserung der Gütezahl führt, die größer als andere Kandidatenreferenzspektren ist, die während dieser Iteration (105) berücksichtigt werden, und der iterative Prozess wiederholt wird, während die Verbesserungen der Gütezahl ein voreingestelltes Kriterium erfüllen.

2. Verfahren nach Anspruch 1, wobei die Gütezahl gemäß einer Gütefunktion bestimmt wird, die einen Vergleich zwischen dem aufgelösten Modell und den Spektraldaten (103) numerisch bewertet, und die Bestimmung, dass eine Komponente in der Probe vorhanden ist, darauf basiert, ob die Bewertung für das Kandidatenreferenzspektrum, das dieser Komponente entspricht, ein voreingestelltes Kriterium (105, 106) erfüllt.

3. Verfahren nach einem der Ansprüche 1 oder 2, wobei die Gütezahl ein Maß für die Anpassungsgüte ist.

4. Verfahren nach Anspruch 3, umfassend ein Bestimmen, dass eine Komponente in der Probe vorhanden ist, auf Basis dessen, ob der Einschluss des Kandidatenreferenzspektrums, das dieser Komponente entspricht, in das Modell das Maß für die Anpassungsgüte des Modells an die Spektraldaten über eine voreingestellte Grenze (106) verbessert, und ein optionales Einstellen der voreingestellten Grenze für eine gewünschte Spezifität und/oder Empfindlichkeit.

5. Verfahren nach Anspruch 4, wobei die voreingestellte Grenze eine proportionale Verbesserung der Anpassungsgüte ist und wobei optional die proportionale Verbesserung der Anpassungsgüte eine Verbesserung der Anpassungsgüte relativ zu einer für die Spektraldaten und den Satz vorbestimmter Referenzspektren erreichbaren Grundlinien-Anpassungsgüte ist, und wobei ferner optional die Grundlinie ein Maß für die Anpassungsgüte ist, die erhalten wird, wenn alle vorbestimmten Komponentenreferenzspektren in dem Modell enthalten sind.

6. Verfahren nach einem der Ansprüche 3 bis 5, wobei das Maß für die Anpassungsgüte eines ist, das aus der Gruppe aus Lack-of-Fit, Bestimmtheitsmaß und Plausibilitätsquotiententest ausgewählt ist, und wobei optional das Maß für die Anpassungsgüte ein Lack-of-Fit ist, der gegeben ist durch:

$$LoF = \sqrt{\frac{\sum_{i=1}^{I}[X_i - \sum_{k=1}^{K} C_k S_{ki}]^2}{\sum_{i=1}^{I} X_i^2}}$$

wobei $\underline{X}$ die Spektraldaten sind, $S_k$ ein Satz von K Komponentenreferenzspektren ist, für die das Modell aufgelöst wird, wobei jedes I Datenpunkte aufweist, $C_k$ die Konzentration für die k-ten Komponentenreferenzspektren ist und i der Spektralfrequenzindex ist.

7. Verfahren nach einem der vorhergehenden Ansprüche, wobei Komponenten als in der Probe in einer Reihenfolge abnehmender Signifikanz vorhanden bestimmt werden, wie durch die Gütezahl bestimmt ist, und in jeder Iteration das Modell für jedes Kandidatenreferenzspektrum zusammen mit Komponentenreferenzspektren von größerer Signifikanz, wie in vorhergehenden Iterationen (103) bestimmt ist, separat aufgelöst wird.

8. Verfahren nach einem der Ansprüche 7, wobei eine Iteration ein Bestimmen, ob eine Differenz zwischen der Gütezahl für ein signifikantestes Kandidatenreferenzspektrum und den anderen Kandidatenreferenzspektren innerhalb eines vordefinierten Schwellenwerts liegt, und ein Aufteilen des iterativen Prozesses in parallele Iterationen für jedes Kandidatenreferenzspektrum umfasst, das innerhalb des Schwellenwerts liegt, wobei für jede parallele Iteration das andere Kandidatenreferenzspektrum anstelle des signifikantesten Kandidatenspektrums als ein nächstes signifikantestes Spektrum in der Reihenfolge betrachtet wird.

9. Verfahren nach Anspruch 7, wobei das Bestimmen, dass die Komponente in der Probe vorhanden ist, darauf basiert, ob die Komponente durch alle parallelen Iterationen als in der Probe vorhanden bestimmt wird.

10. Verfahren nach einem der vorhergehenden Ansprüche, wobei der Einschluss eines Komponentenreferenzspektrums in das Modell automatisch den Einschluss einer oder mehrerer Transformationen und/oder Verzerrungen dieses Komponentenreferenzspektrums und/oder eines oder mehrerer diesem Komponentenreferenzspektrum zugeordneter Korrekturspektren auslöst.

11. Verfahren nach einem der vorhergehenden Ansprüche, wobei das Auflösen des Modells ein Berechnen einer Konzentration der Komponente in der Probe umfasst, und das Bestimmen, dass die Komponente in der Probe vorhanden ist, darauf basiert, ob eine positive Konzentration für die Komponente (104) berechnet ist.

12. Vorrichtung zum Bestimmen von in einer Probe vorhandenen Komponenten aus Spektraldaten, die aus der Probe erhalten werden, wobei die Vorrichtung umfasst:
einen Prozessor (25), der angeordnet ist, um:

die Spektraldaten zu empfangen,
einen Satz vorgegebener Komponentenreferenzspektren abzurufen und
das Verfahren nach einem der Ansprüche 1 bis 11 durchzuführen.

13. Datenträger, auf dem Anweisungen gespeichert sind, die, wenn sie von einem Prozessor (25) ausgeführt werden, den Prozessor (25) veranlassen:

- von einer Probe erhaltene Spektraldaten zu empfangen,
- einen Satz vorgegebener Komponentenreferenzspektren abzurufen, und
- das Verfahren nach einem der Ansprüche 1 bis 11 durchzuführen.

## Revendications

1. Procédé de détermination de composants présents dans un échantillon à partir de données spectrales obtenues à partir de l'échantillon comprenant :
un processus itératif dans lequel, chaque itération comprend le fait :

de résoudre un modèle des données spectrales séparément pour des candidats à partir d'un ensemble de spectres de référence de composants prédéterminés (103), et de déterminer si un composant est présent dans l'échantillon sur la base d'un facteur de mérite quantifiant un effet d'inclusion du spectre de référence candidat correspondant à ce composant dans le modèle (104 à 107),
**caractérisé en ce que** la détermination de la présence du composant dans l'échantillon est basée sur le fait que l'inclusion du spectre de référence candidat correspondant à ce composant dans le modèle entraîne une amélioration du facteur de mérite supérieure à celle des autres spectres de référence candidats considérés au cours de cette itération (105) et le processus itératif est répété tant que les améliorations du facteur de mérite répondent à un critère préétabli.

2. Procédé selon la revendication 1, dans lequel le facteur de mérite est déterminé conformément à une fonction de mérite, qui note numériquement une comparaison entre le modèle résolu et les données spectrales (103), et la détermination de la présence d'un composant dans l'échantillon est basée sur le fait que le score pour le spectre de référence candidat correspondant à ce composant répond à un critère préétabli (105, 106).

3. Procédé selon la revendication 1 ou 2, dans lequel le facteur de mérite est une mesure de la qualité d'ajustement.

4. Procédé selon la revendication 3, comprenant la détermination de la présence d'un composant dans l'échantillon sur la base du fait que l'inclusion du spectre de référence candidat correspondant à ce composant dans le modèle améliore la mesure de qualité d'ajustement du modèle pour les données spectrales au-dessus d'une limite préétablie (106) et, facultativement, le réglage de la limite préétablie pour une spécificité et/ou une sensibilité souhaitée(s).

5. Procédé selon la revendication 4, dans lequel la limite préétablie est une amélioration proportionnelle de la qualité d'ajustement, et, facultativement, dans lequel l'amélioration proportionnelle de la qualité d'ajustement est une amélioration de la qualité d'ajustement par rapport à une qualité d'ajustement de ligne de base pouvant être réalisée pour les données spectrales et l'ensemble de spectres de référence prédéterminés et en outre facultativement, dans lequel la ligne de base est une mesure de la qualité d'ajustement obtenue lorsque tous les spectres de référence de composants prédéterminés sont inclus dans le modèle.

6. Procédé selon l'une quelconque des revendications 3 à 5, dans lequel la mesure de la qualité d'ajustement est une mesure choisie dans le groupe de test de défaut d'ajustement, R-carré et de rapport de vraisemblance et, facultativement, dans lequel la mesure de la qualité d'ajustement est un défaut d'ajustement donné par :

$$LoF = \sqrt{\frac{\sum_{i=1}^{I}[X_i - \sum_{k=1}^{K} C_k S_{ki}]^2}{\sum_{i=1}^{I} X_i^2}}$$

où $X$ représente les données spectrales, $S_k$ représente un ensemble de $K$ spectres de référence de composants pour lesquels le modèle est résolu, ayant chacun $I$ points de données, $C_k$ représente la concentration pour les $k$th spectres de référence de composants et $i$ l'indice de fréquence spectrale.

7. Procédé selon l'une quelconque des revendications précédentes, dans lequel des composants sont déterminés comme étant présents dans l'échantillon dans un ordre d'importance décroissante comme déterminé par le facteur de mérite et, à chaque itération, le modèle est résolu séparément pour chaque spectre de référence candidat ensemble avec des spectres de référence de composants de plus grande importance comme déterminé dans les itérations précédentes (103).

8. Procédé selon la revendication 7, dans lequel une itération comprend la détermination du fait qu'une différence entre le facteur de mérite pour des spectres de référence candidats les plus importants et les autres spectres de référence candidats se situe dans un seuil prédéfini et la division du processus itératif en itérations parallèles pour chaque spectre de référence candidat qui se situe dans le seuil, dans lequel pour chaque itération parallèle, l'autre spectre de référence candidat, plutôt que le spectre candidat le plus important, est considéré comme étant un spectre suivant le plus important dans l'ordre.

9. Procédé selon la revendication 7, dans lequel la détermination de la présence du composant dans l'échantillon est basée sur le fait que le composant est déterminé comme étant présent dans l'échantillon par toutes les itérations parallèles.

10. Procédé selon l'une quelconque des revendications précédentes, dans lequel l'inclusion d'un spectre de référence de composant dans le modèle déclenche automatiquement l'inclusion d'une ou de plusieurs transformation(s) et/ou de distorsions de ce spectre de référence de composant et/ou d'un ou de plusieurs spectre(s) correctif(s) associé(s) à ce spectre de référence de composant.

11. Procédé selon l'une quelconque des revendications précédentes, dans lequel la résolution du modèle comprend le calcul d'une concentration du composant dans l'échantillon et la détermination de la présence du composant dans l'échantillon est basée sur le fait qu'une concentration positive est calculée pour le composant (104).

12. Appareil de détermination de composants présents dans un échantillon à partir de données spectrales obtenues à partir de l'échantillon, l'appareil comprenant un processeur (25) agencé :

   pour recevoir les données spectrales,
   pour récupérer un ensemble de spectres de référence de composants prédéterminés, et
   pour exécuter le procédé selon l'une quelconque des revendications 1 à 11.

13. Support de données sur lequel sont stockées des instructions qui, lorsqu'elles sont exécutées par un processeur (25), amènent le processeur (25):

   à recevoir des données spectrales obtenues à partir d'un échantillon,
   à récupérer un ensemble de spectres de référence de composants prédéterminés, et
   à exécuter le procédé selon l'une quelconque des revendications 1 à 11.

Fig. 1

Receive a Raman spectrum of a sample.

101

Retrieve component reference spectra.

102

For each candidate spectrum, resolve the DCLS model for the candidate spectrum together with any component reference spectra already selected for the final form of the model and calculate an improvement in a measure of LoF.

103

Remove from consideration candidate spectra resolved as having a negative concentration.

104

Compare the measures of LoF to determine a leading candidate spectrum that results in the greatest improvement to the LoF.

105

Check that the improvement in the LoF resulting from inclusion of the leading candidate spectrum to the model is above a preset limit.

106

No

Terminate iteration, resolve the model for the selected component reference spectra and output calculated concentrations for components in the sample.

108

Yes

Select the leading candidate spectrum for the final form of the model.

107

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5442438 A
- US 5510894 A
- WO 2007144664 A1
- US 20110045598 A1
- US 20090210194 A1
- US 7254501 B1
- US 7072770 B1

**Non-patent literature cited in the description**

- **PATRICK J. CUTLER et al.** Methods for Kinetic Modeling of Temporally Resolved Hyperspectral Confocal Fluorescence Images. *Applied Spectroscopy,* 01 February 2009, 153-163